# EUROPÄISCHE PATENTSCHRIFT

(11) **EP 1 486 125 B1**
(45) Veröffentlichungstag und Bekanntmachung des Hinweises auf die Patenterteilung: **28.10.2009**
(21) Anmeldenummer: 04013597.2
(22) Anmeldetag: 09.06.2004
(51) Int. Cl.: A23G 3/02, A23G 3/04

(54) **Verfahren und Vorrichtung zum kontinuierlichen Herstellen von gekochten und vakuumierten Süsswarenmassen**
Method and apparatus for the continuous manufacture of cooked and vacuum-treated sweet masses
Procédé et appareil pour la préparation continue de masses de sucre cuit et traité sous vide

(30) Priorität: 13.06.2003 DE 10326791
(43) Veröffentlichungstag der Anmeldung: 15.12.2004
(73) Patentinhaber: CHOCOTECH GmbH, 38855 Wernigerode (DE)
(72) Erfinder: Markwardt, Klaus, 30880 Laatzen (DE); Fleisch, Jens, 38855 Wernigerode (DE); Versic, Zvonimir, 30655 Hannover (DE)
(74) Vertreter: Rehberg Hüppe + Partner

(56) Entgegenhaltungen:
- EP-A- 0 054 960
- DE-A1- 4 019 916
- US-A- 4 487 118

## Beschreibung

Die Erfindung betrifft ein Verfahren zum kontinuierlichen Herstellen von gekochten und vakuumierten Süßwarenmassen, insbesondere Bonbonmassen, Karamellmassen, Fondantmassen oder dergleichen, indem eine wässrige Lösung von Einsatzstoffen gekocht, ausgedampft, unter Unterdruck gesetzt und dabei weiter ausgedampft und gekühlt wird. Die Erfindung bezieht sich auch auf eine Vorrichtung zum kontinuierlichen Herstellen von gekochten und vakuumierten Süßwarenmassen, insbesondere Bonbonmassen, Karamellmassen, Fondantmassen oder dergleichen, insbesondere nach mindestens einem der Ansprüche 1 bis 3, mit einem Kocher, mindestens einem über eine Leitung damit verbundenen Ausdampfraum und einer nachgeschalteten Austragseinrichtung. Die Erfindung betrifft insbesondere die kontinuierliche Herstellung von Hartbonbonmassen, und zwar aus entweder zuckerhaltiger Masse oder aus zuckerfreier Masse, also unter Verwendung von Zuckeraustauschstoffen. Dabei wird eine wässrige Lösung aus den Einsatzstoffen erstellt und behandelt, wobei schließlich nach einer Austragseinrichtung mit Hilfe eines Mischers weitere Zuschlagsstoffe zugeführt und mit der behandelten Lösung vermischt werden. Anschließend erfolgt die Weiterverarbeitung der Süßwarenmasse, insbesondere die Formgebung zu beispielsweise Bonbons.

### STAND DER TECHNIK

Ein Verfahren und eine Vorrichtung der eingangs beschriebenen Art sind aus der DE 33 36 187 A1 bekannt. Als Kocher findet dort ein Schlangenkocher Verwendung, dessen Ausgang über eine Leitung an einen Ausdampfraum angeschlossen ist, in welchem ein Ausdampfen der gekochten Masse stattfindet. Über einen Brüdenabzug werden Brüden aus dem Ausdampfraum entfernt. An den Ausdampfraum schließt sich ein Vakuumraum an, in den die gekochte Masse kontinuierlich eingesaugt wird. In dem Vakuumraum findet infolge des geringen herrschenden absoluten Druckes eine Nachverdampfung nebst daraus resultierender Abkühlung der Masse statt. Es handelt sich hier um die Herstellung normaler Zuckerbonbons, also Bonbons, die aus bzw. unter Verwendung von Saccharose und Glukosesirup hergestellt werden. Das Kochen erfolgt in einem Schlangenkocher, wobei die heiße Lösung eine Temperatur bis ca. 140 °C bekommen kann. Bei diesem bekannten Verfahren lässt sich eine Trockensubstanz von ca. 97 % erreichen.

Auch aus der DE 40 19 916 A1 ist ein Verfahren und eine Vorrichtung der eingangs beschriebenen Art bekannt. Die wässrige Lösung der Einsatzstoffe wird in einem Kocher gekocht und über eine Leitung einem Ausdampfraum zugeführt. Der Ausdampfraum besitzt einen Brüdenabzug, der mit der Atmosphäre verbunden ist. Unter dem kegelförmigen Ausdampfraum befindet sich ein Vakuumraum. Der Übertritt von Masse aus dem Ausdampfraum in den Vakuumraum wird mit einem Nadelventil gesteuert. Der Vakuumraum ist mit einer Unterdruckquelle verbunden. Damit wird die wässrige Lösung der Einsatzstoffe unter atmosphärischem Druck gekocht und über die Leitung unmittelbar in den ebenfalls unter Atmosphärendruck stehenden Ausdampfraum überführt. Wenn zuckerhaltige Einsatzstoffe Verwendung finden, gelangt die Lösung über das geöffnete Nadelventil in den Vakuumraum, in welchem die Lösung dann weiter ausgedampft wird und diesbezüglich ein Kühlungseffekt auftritt. Über eine Austragseinrichtung wird die Masse dann der Weiterverarbeitung zugeführt. Im Falle der Verwendung von Zuckeraustauschstoffen gelangt eine spezielle mit Schabern ausgestattete Kühleinrichtung zur Anwendung. Diese Kühleinrichtung ist zwischen den Ausdampfraum und den Vakuumraum geschaltet, so dass die Behandlungszeit verlängert wird. In der Kühleinrichtung und im Vakuumraum herrscht ein übereinstimmender Unterdruck.

Aus der DE 38 21 505 C2 ist ein Verfahren zur kontinuierlichen Herstellung von Hartbonbonmassen aus einer wässrigen Lösung von Einsatzstoffen bekannt. Als Einsatzstoffe werden Zuckeraustauschstoffe verwendet, deren Viskositäten bei gleichen Temperaturen und gleichen Trockensubstanzgehalten unterhalb der von Saccharose-Glukosesirup-Massen liegt. Die so gebildete zuckerfreie Lösung wird bereits unter Einwirkung von Unterdruck in einem Schlangenkocher gekocht. Der Ausgang des Kochers ist lediglich über eine Leitung mit dem Eingang eines nachgeschalteten Ausdampfraums verbunden. In dem Ausdampfraum wird die gekochte Lösung unter Einwirkung eines Unterdrucks von nicht höher als 0,3 bar absolut ausgedampft. Dieser Unterdruck wirkt sich nicht nur in dem nachgeschalteten Ausdampfraum aus, sondern setzt sich bis in die Schlange des Schlangenkochers fort, wobei er sich mit der Länge dieser Rohrleitung abbaut. Der Kochvorgang findet also, in Strömungsrichtung durch den Kocher gesehen, unter fortlaufender Druckerniedrigung bis auf den Unterdruck im Ausdampfraum statt. Durch diese Druckerniedrigung werden zwar besonders hohe Kochtemperaturen der Lösung vermieden, was für verschiedene Anwendungsfälle vorteilhaft sein kann. Durch die Anwendung von Unterdruck bereits im Kocher ergibt sich ein sehr großes Wasserdampfvolumen. Hierdurch wird in nachteiliger Weise die nutzbare Wärmeübertragungsfläche des Kochers verkleinert, so dass dieser entsprechend größer gestaltet werden muss.

### AUFGABE DER ERFINDUNG

Der Erfindung liegt die Aufgabe zugrunde, ein Verfahren und eine Vorrichtung der eingangs beschriebenen Art bereitzustellen, die die kontinuierliche Herstellung von Süßwarenmassen mit einer geringen Restwassermenge von insbesondere < 1,5 % ermöglichen.

### LÖSUNG

Die Aufgabe der Erfindung wird erfindungsgemäß mit den Merkmalen der unabhängigen Patentansprüche 1 bzw. 4 gelöst.

### BESCHREIBUNG DER ERFINDUNG

Das Kochen der wässrigen Lösung der Einsatzstoffe geschieht unter druckmäßiger Trennung zu dem Ausdampfen. Zu diesem Zweck wird zwischen Kocher und Ausdampfraum eine Druckbarriere eingeschaltet, insbesondere ein Druckhalteventil, die es ermöglicht, stromauf zu der Druckbarriere einen anderen Druck als stromab kontinuierlich aufrechtzuerhalten, ohne den kontinuierlichen Durchfluss von Süßwarenmasse zu behindern. Auf diese Weise kann im Kocher atmosphärischer Druck oder geringer Überdruck angewendet werden, während die Ausdampfung unter Einwirkung eines Unterdruckes durchgeführt wird. Das Kochen unter atmosphärischem Druck oder geringem Überdruck stellt sicher, dass die Wärmeübertragungsfläche des Kochers optimal genutzt wird, da das entstehende Wasserdampfvolumen vergleichsweise klein bleibt. Der Kocher kann beispielsweise als Wärmetauscher, Schlangenkocher oder Rotorkocher ausgebildet werden. Die gekochte Lösung gelangt nach Überwindung der Druckbarriere unter den Einfluss von Unterdruck. Im Stand der Technik wird die Unterdruckbehandlung relativ kurzzeitig durchgeführt. So ergibt sich dort eine Verweilzeit für die Masse unter Unterdruck, die in der Größenordnung von 2 Sekunden liegt, bevor die Masse mit Hilfe der Austragseinrichtung ausgetragen wird. Mit der erfindungsgemäßen Lösung wird eine Verweilzeit von einigen Sekunden angestrebt, also eine gegenüber dem Stand der Technik erheblich ausgeweitete Verweilzeit, die auch mehr als 10 Sekunden betragen kann. Dies zielt darauf ab, möglichst hohe Trockensubstanzgehalte, auch größer als 99 %, zu erzielen. Zur Überführung der während des Ausdampfens unter Unterdruck stehenden Masse durch die Austragseinrichtung ist auch eine ausreichende Viskosität der Masse erforderlich, die sich durch die intensive Ausdampfung und die damit verbundene Abkühlung der Masse vor der Austragseinrichtung einstellt. Die Anwendung von Zusatzkühlern an dieser Stelle entfällt vorteilhaft.

Das Ausdampfen lässt sich in einer Stufe durchführen. Vorteilhaft gelangen jedoch zwei Stufen zur Anwendung, wobei in der ersten Stufe ein Unterdruck kleiner als etwa 0,6 bar absolut und in der anschließenden zweiten Stufe ein Unterdruck kleiner als etwa 0,15 bar absolut angewendet werden. Insbesondere ist es möglich, das Verfahren so zu steuern, dass in der ersten Stufe bei einem Unterdruck von 0,08 bar absolut und in der zweiten Stufe bei einem Unterdruck von 0,05 bar absolut Trockensubstanzgehalte von > 99 % erreichbar sind.

Eine solche Druckbarriere kann insbesondere durch die Einschaltung eines Druckhalteventils in der Leitung zwischen Kocher und Ausdampfraum erreicht werden. Ein solches Druckhalteventil, welches manchmal auch als Quetschventil bezeichnet wird, ermöglicht es, im Kocher einen vergleichsweise höheren Druck als im Ausdampfraum aufrechtzuerhalten. Der Kochvorgang wird vorteilhaft kurzzeitig gestaltet, während die Verweilzeit der Lösung bzw. Masse im Ausdampfraum im Vergleich zum Stand der Technik vergrößert wird. Die Verweilzeit unter Ausdampfbedingungen soll auf mehrere Sekunden verlängert werden, insbesondere bis in bzw. über den Bereich von etwa 10 Sekunden. Zu diesem Zweck wird der Abschnitt der Leitung zwischen dem Druckhalteventil und dem Ausdampfraum großquerschnittig und lang ausgebildet und/oder durch Zwischenschaltung eines zusätzlichen Verweilbehälters vergrößert. In diesen Querschnitten soll jedoch keine Pufferung und kein Absetzen der Lösung bzw. Masse erfolgen. An allen Stellen soll eine kontinuierliche Strömung beibehalten bleiben, so dass die Masse immer in Bewegung ist. Hierdurch wird auch erreicht, dass das Verhältnis von Zutaten und Grundmasse während der Behandlung konstant bleibt, was beispielsweise für medizinische Bonbons von besonderer Bedeutung ist. Die Lösung bzw. Masse soll sich auch im Ausdampfraum kontinuierlich und gleichmäßig bewegen.

Der Ausdampfraum kann auch einen ersten und einen zweiten Unterdruckraum aufweisen, die über ein einstellbares Nadelventil miteinander verbunden sind. Dieses Nadelventil ermöglicht die Variation und damit Einstellung eines Ringquerschnittes, über den die Lösung aus dem ersten Unterdruckraum in den zweiten Unterdruckraum übertritt. Dies geschieht in der Regel durch eine Bauweise übereinander und unter Schwerkrafteinfluss, wobei zusätzlich die Differenz der beiden Unterdrücke zur Überführung genutzt wird.

Der Ausdampfraum bzw. die Ausdampfräume einschließlich des Abschnitts der Leitung nach dem Druckhalteventil sind vorteilhaft doppelwandig ausgebildet, wobei der Zwischenraum an einen Temperierkreislauf angeschlossen ist. Dies dient zur Aufrechterhaltung entsprechender Temperaturen im gesamten Ausdampfraum. Entsprechendes gilt auch für einen zusätzlichen Verweilbehälter.

Bei zweistufiger Ausdampfung kann der erste Unterdruckraum an einen ersten Unterdruckerzeuger und der zweite Unterdruckraum an einen zweiten separaten Unterdruckerzeuger angeschlossen sein. Dies ist sinnvoll, da unterschiedliche Unterdrücke zur Einwirkung kommen. Es ist aber auch möglich, die unterschiedlichen Unterdrücke von einem gemeinsamen Druckerzeuger, beispielsweise einer Pumpe, abzunehmen.

Bei dem zweistufigen Ausdampfen können die beiden Unterdruckräume so ausgebildet und aufeinander abgestimmt sein, dass die Verweilzeit der gekochten Lösung im ersten Unterdruckraum etwa dem Vierfachen der Verweilzeit im zweiten Unterdruckraum entspricht. So kann die Verweilzeit im ersten Unterdruckraum etwa 8 Sekunden und im zweiten Unterdruckraum etwa 2 Sekunden betragen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematische Darstellung einer Vorrichtung bzw. Anlage mit zweistufiger Ausdampfung,
- **Fig. 2**: zeigt eine zur Durchführung des Verfahrens geeignete weitere Vorrichtung mit einstufiger Ausdampfung,
- **Fig. 3**: zeigt ein Siedeliniendiagramm mit Darstellung der Siedetemperatur über der Trockensubstanz,
- **Fig. 4**: zeigt ein Siedeliniendiagramm mit Gegenüberstellung der Erfindung und des Stands der Technik und
- **Fig. 5**: zeigt die schematische Darstellung einer Anlage, die in einfacher Weise von der Behandlung zuckerhaltiger Süßwarenmassen auf zuckerfreie Süßwarenmassen umstellbar ist.

### FIGURENBESCHREIBUNG

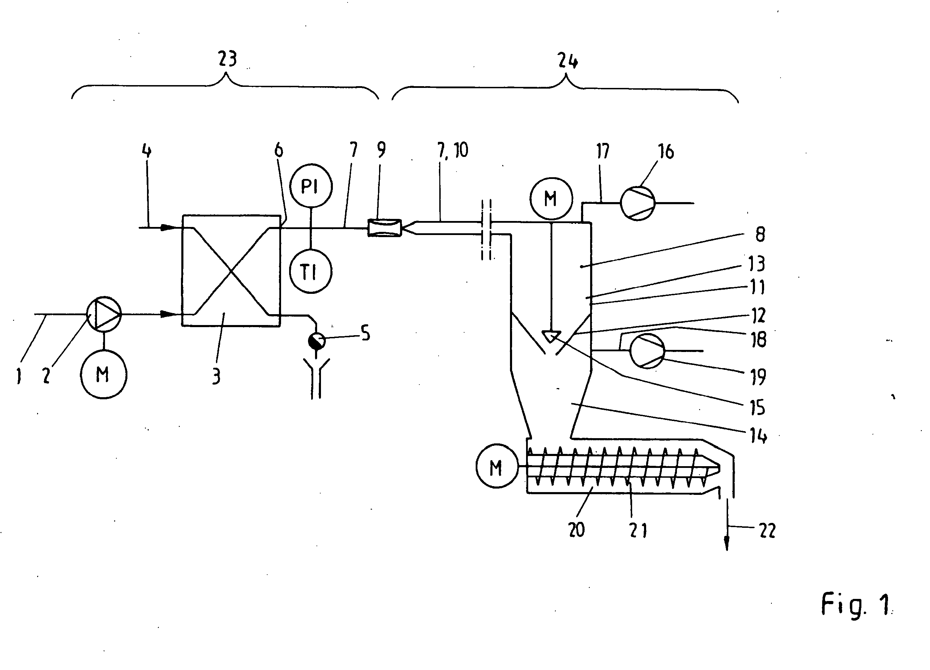

**Fig. 1** zeigt nur die für das Verständnis der vorliegenden Erfindung wesentlichen Teile. Es versteht sich, dass die Einsatzstoffe entsprechend der jeweiligen Rezeptur abgewogen und in eine wässrige Lösung überführt werden. Diese wässrige Lösung wird über eine Leitung 1 mit einer von einem Motor M angetriebenen Pumpe 2 einem Kocher 3 zugeführt. Der Kocher 3 kann als Schlangenkocher ausgebildet sein. Er wird demzufolge von einer Leitung 4 durchsetzt, durch die Dampf geschickt wird. Am Ausgang des Kochers 3 wird das entsprechende Kondensat 5 abgeführt.

Der Kocher 3 weist einen Ausgang 6 auf, von dem eine Leitung 7 zu einem Ausdampfraum 8 führt. In der Leitung 7 ist ein Drucksensor PI und ein Temperaturfühler TI angeordnet. In der Leitung 7 ist ein Druckhalteventil 9 vorgesehen. Die zum Ausdampfraum 8 führende Leitung 7 weist nach dem Druckhalteventil 9 einen Abschnitt 10 auf, der großquerschnittig und lang ausgebildet ist und durch den die gekochte Lösung dem Ausdampfraum 8 zugeführt wird, so dass die Verweilzeit im Ausdampfraum 8, zu dem auch der Abschnitt 10 gehört, in die Größenordnung mehrerer Sekunden, insbesondere in einen Bereich von 8-10 Sekunden, angehoben wird.

Der Ausdampfraum 8 wird von einem Behälter 11 gebildet, der in Rundbauweise mit vertikaler Achse realisiert sein kann. Der Innenraum dieses Behälters 11 ist durch eine Trichterwandung 12 in zwei übereinander angeordnete Unterdruckräumen 13 und 14 unterteilt. Zwischen den Unterdruckräumen 13 und 14 ist ein über einen Motor M verstellbares Nadelventil 15 angeordnet, das mit der Trichterwandung 12 zusammenarbeitet und dessen Kreisringquerschnitt motorisch ver- bzw. einstellbar ausgebildet ist. Der Unterdruckraum 13 ist an einen Unterdruckerzeuger 16 angeschlossen, über dessen Leitung 17 ausdampfender Brüden abgeführt wird. Es versteht sich, dass sich der von dem Unterdruckerzeuger 16 erzeugte Unterdruck nicht nur unmittelbar in dem ersten Unterdruckraum 13 in dem Behälter 11, sondern auch in dem vorgeschalteten Abschnitt 10 der Leitung 7 auswirkt. Durch die angehobene Verweilzeit der Lösung bzw. Masse in dem Unterdruckraum 13 findet die wesentliche Ausdampfung statt. Es kann hier vorteilhaft ein Unterdruck < 0,6 bar absolut angewendet werden.

Entsprechend ist der zweite Unterdruckraum 14 an eine Leitung 18 angeschlossen, in der ein zweiter Unterdruckerzeuger 19 angeordnet ist. Damit ist die Möglichkeit gegeben, in dieser zweiten Stufe einen Unterdruck < 0,15 bar absolut anzuwenden. Am unteren Ende des Behälters 11 bzw. des Unterdruckraums 14 ist eine Austragseinrichtung 20 vorgesehen. Die Austragseinrichtung 20 besitzt eine über einen Motor M angetriebene Förderschnecke 21. Die Förderschnecke 21 der Austragseinrichtung 20 wird so betrieben, dass die Zwischenräume zwischen den Gängen der Förderschnecke 21 voll mit Süßwarenmasse ausgefüllt sind, wodurch ein druckmäßiger Abschluss des zweiten Unterdruckraums 14 erreicht wird. Von dem Ausgang der Austragseinrichtung 20 führt eine Leitung 22 zu einem Mischer und weiter zu einer üblichen Be- und Verarbeitung, beispielsweise Formgebung der Bonbons.

Fig. 1 lässt vor und nach dem Druckhalteventil 9 zwei Bereiche der Vorrichtung erkennen. In einem ersten Bereich 23 wird jedenfalls kein Unterdruck angewendet. In dem zweiten Bereich 24 wird Unterdruck angewendet.

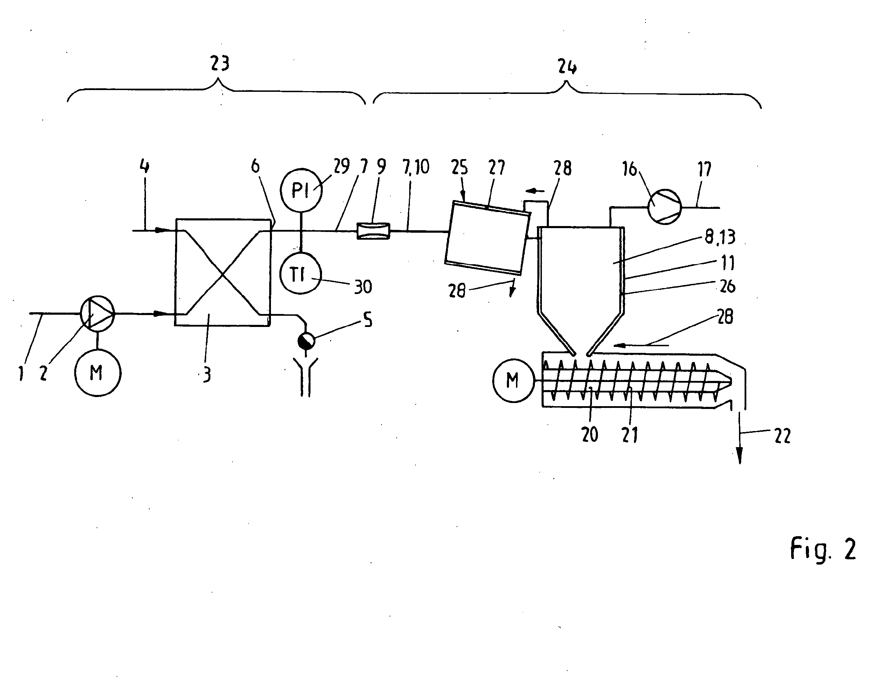

**Fig. 2** zeigt schematisch eine Vorrichtung mit einstufiger Ausdampfung. Diese Vorrichtung weist wesentliche Teile der Vorrichtung gemäß Fig. 1 auf, weshalb auf die dortige Beschreibung verwiesen werden kann. Im Unterschied zu der Ausführungsform gemäß Fig. 1 besitzt der Behälter 11 nur einen einzigen Ausdampfraum 8, der zugleich als einziger Unterdruckraum 13 vorgesehen ist. Die Anordnung eines Nadelventils kann entfallen. Die Austragseinrichtung 20 ist hier unmittelbar am Ausgang des Unterdruckraums 13 vorgesehen. In den Abschnitt 10 der Leitung 7 ist ein Zwischenbehälter 25 eingeschaltet, der im Wesentlichen die Aufgabe hat, die Verweilzeit der gekochten Lösung zu verlängern. Der Zwischenbehälter 25 kann geneigt angeordnet sein, um den kontinuierlichen Durchfluss der Masse sicherzustellen. Die restlichen Teile des Abschnitts 10 der Leitung 7 vor und nach dem Zwischenbehälter 25 können als dünnquerschnittige Leitungen oder aber, wie in Fig. 1 dargestellt, als großquerschnittige lange Leitungsstücke ausgebildet und bemessen sein. Sowohl der Behälter 11 wie auch der Zwischenbehälter 25 sowie gegebenenfalls der lange großquerschnittige Abschnitt 10 der Leitung 7 können mit einem doppelwandigen Gehäuse ausgebildet sein, deren Zwischenräume 26 und 27 an einen Temperierkreislauf 28 angeschlossen sind. Am Ausgang 6 des Kochers 3 oder in dem Abschnitt der Leitung 7 vor dem Druckhalteventil 9 kann ein Drucksensor 29 und ein Temperaturfühler 30 vorgesehen sein. Im Kocher 3 wird eine Kochtemperatur angewendet, die etwa 145 °C und mehr beträgt. Die Anwendung unterschiedlicher Kochtemperaturen richtet sich nach der Art und den Eigenschaften der Süßwarenmasse.

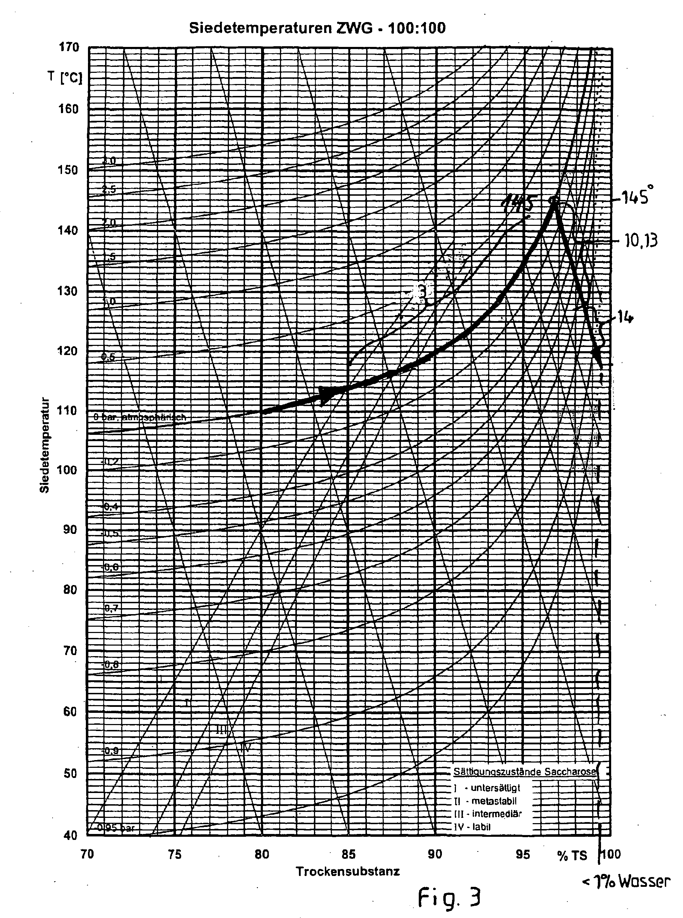

**Fig. 3** zeigt ein Siedeliniendiagramm mit Darstellung der Siedetemperatur über der Trockensubstanz in Prozent. Es ist eine Kochlinie dargestellt, wie sie beispielsweise mit der Vorrichtung gemäß Fig. 1 erzielt werden kann. Ausgangspunkt der dargestellten Kochlinie ist eine wässrige Lösung von Einsatzstoffen mit einem Trockensubstanzgehalt von 80 %, also eine 20%ige wässrige Lösung der Einsatzstoffe. Gekocht wird beispielsweise auf der Linie des atmosphärischen Druckes, d. h. im Kocher 3 findet eine Temperaturerhöhung entlang dieser Drucklinie bis zu einer Temperatur von 145 °C statt. Die gekochte Süßwarenmasse wird dann in dem ersten Unterdruckraum 10, 13 in der ersten Stufe ausgedampft, wobei letztlich ein Trockensubstanzgehalt von etwa 98,5 % erreicht wird. In der nachfolgenden zweiten Stufe wird in dem zweiten Unterdruckraum 14 weiter ausgedampft und die Masse abgekühlt, so dass letztendlich ein Trockensubstanzgehalt > 99 %, also mit einem Wasseranteil < 1 % resultiert. Dabei findet in der Masse eine Abkühlung statt, so dass am Eingang in die Austragseinrichtung die Masse eine Temperatur von 118 °C aufweist.

Sofern im Kocher 3 unter Überdruckeinwirkung gekocht wird, verläuft der Anfang der Prozesslinie auf entsprechend höherem Niveau. Dies kann in der Regel auch zu höheren Kochtemperaturen führen. In entsprechender Weise schließt sich eine zweistufige Ausdampfung an.

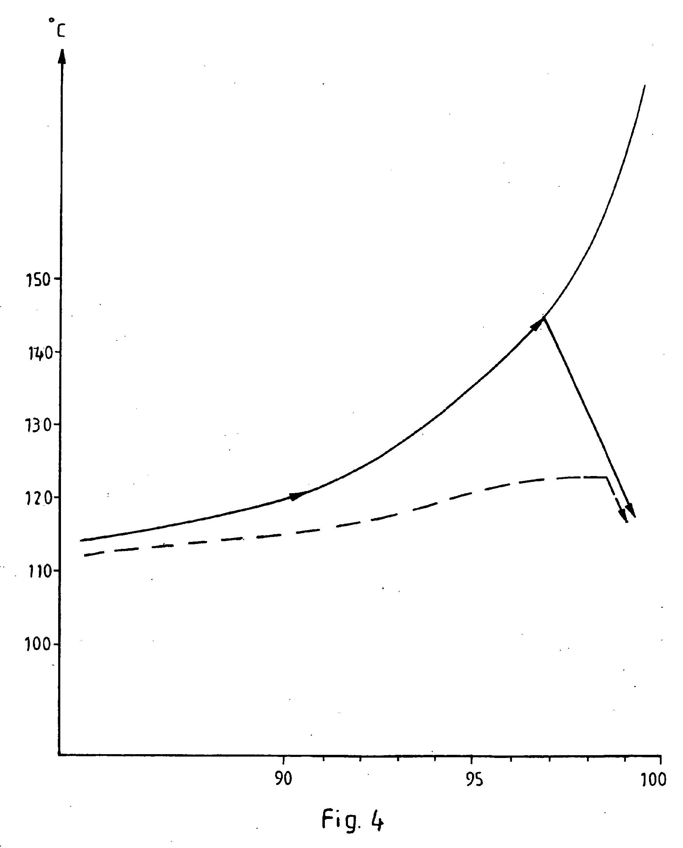

**Fig. 4** verdeutlicht noch einmal in stark schematisierter Weise den Unterschied zwischen dem erfindungsgemäßen Verfahren und dem Stand der Technik. Die Kochlinie nach dem neuen Verfahren ist in durchgezogener Linie dargestellt. Das Verfahren nach dem Stand der Technik wird durch eine gestrichelte Linie verdeutlicht. Die jeweils ansteigenden Bereiche der Linien zeigen die Verhältnisse im Kocher. Die abfallenden Bereiche der Linien geben die Verhältnisse während des Ausdampfens wieder.

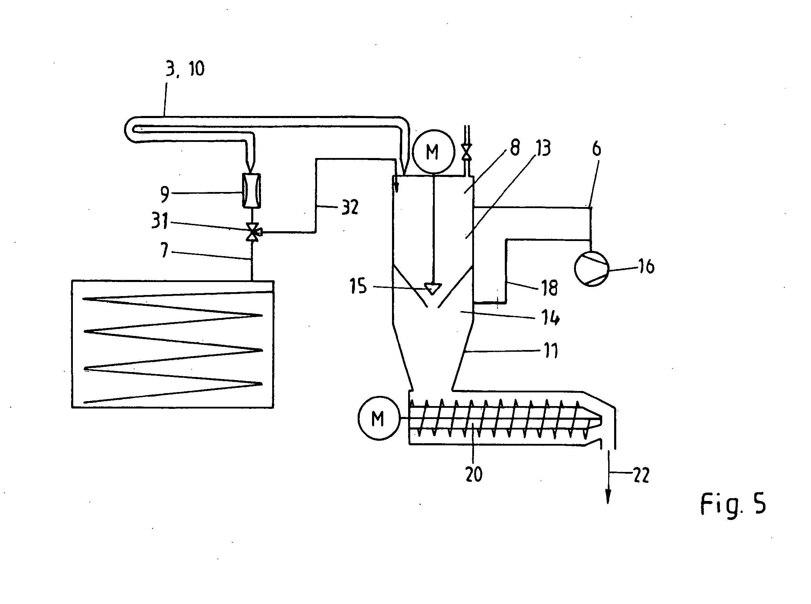

Die bisher beschriebenen Ausführungsformen der Vorrichtung sind insbesondere für die kontinuierliche Herstellung von zuckerfreien Süßwarenmassen sinnvoll und vorteilhaft. **Fig. 5** zeigt eine Ausführungsform, die in einfacher Weise von der Herstellung zuckerfreier Süßwarenmassen auf die Herstellung von Süßwarenmassen aus Saccharose und Glukosesirup umgestellt werden kann. Zu diesem Zweck ist in der Leitung 7 ein Dreiwegeventil 31 angeordnet, und zwar vor dem Druckhalteventil 9. Auch hier ist der Abschnitt 10 der Leitung 7 zwischen Druckhalteventil 9 und dem Eingang in den Behälter 11 großquerschnittig und lang ausgebildet. Zwischen dem Dreiwegeventil 31 und dem Eingang des Behälters 11 ist weiterhin eine Leitung 32 vorgesehen. Durch Umstellen des Dreiwegeventils 31 wird bei Behandlung zuckerfreier Massen die Süßwarenmasse über den Abschnitt 10 dem Behälter 11 zugeführt. Bei der Herstellung zuckerhaltiger Süßwaren wird dagegen die Leitung 32 benutzt.

### BEZUGSZEICHENLISTE

- 1: Leitung
- 2: Pumpe
- 3: Kocher
- 4: Leitung
- 5: Kondensat
- 6: Ausgang
- 7: Leitung
- 8: Ausdampfraum
- 9: Druckhalteventil
- 10: Abschnitt
- 11: Behälter
- 12: Trichterwandung
- 13: Unterdruckraum
- 14: Unterdruckraum
- 15: Nadelventil
- 16: Unterdruckerzeuger
- 17: Leitung
- 18: Leitung
- 19: Unterdruckerzeuger
- 20: Austragseinrichtung

- 21: Förderschnecke
- 22: Leitung
- 23: Bereich
- 24: Bereich
- 25: Zwischenbehälter
- 26: Zwischenraum
- 27: Zwischenraum
- 28: Temperierkreislauf
- 29: Drucksensor
- 30: Temperaturfühler
- 31: Dreiwegeventil
- 32: Leitung

## Patentansprüche

1. Verfahren zum kontinuierlichen Herstellen von gekochten und vakuumierten Süßwarenmassen, insbesondere Bonbonmassen, Karamellmassen, Fondantmassen oder dergleichen, indem eine wässrige Lösung von Einsatzstoffen gekocht, ausgedampft, unter Unterdruck gesetzt und dabei weiter ausgedampft und gekühlt wird, **dadurch gekennzeichnet, dass** die wässrige Lösung der Einsatzstoffe zwischen Kochen und Ausdampfen über eine Druckbarriere geführt und damit druckmäßig getrennt wird, dass die Lösung unter atmosphärischem Druck oder geringem Überdruck gekocht wird, und dass die gekochte Lösung nach Überwindung der Druckbarriere unter Unterdruck mit einer Verweilzeit von einigen Sekunden ausgedampft wird.

2. Verfahren nach Anspruch 1, **dadurch gekennzeichnet, dass** die gekochte Lösung mit einer Verweilzeit von mindestens 10 sec. ausgedampft wird.

3. Verfahren nach Anspruch 1 oder 2, **dadurch gekennzeichnet, dass** die gekochte Lösung in zwei Stufen ausgedampft wird, wobei in der ersten Stufe ein Unterdruck kleiner als etwa 0,6 bar absolut und in der anschließenden zweiten Stufe ein Unterdruck kleiner als etwa 0,15 bar absolut angewendet wird.

4. Vorrichtung zum kontinuierlichen Herstellen von gekochten und vakuumierten Süßwarenmassen, insbesondere Bonbonmassen, Karamellmassen, Fondantmassen oder dergleichen, insbesondere nach dem Verfahren mindestens eines der Ansprüche 1 bis 3, mit einem Kocher (3), mindestens einem über eine Leitung (7) damit verbundenen Ausdampfraum (8) und einer nachgeschalteten Austragseinrichtung (20), **dadurch gekennzeichnet, dass** in der Leitung (7) zwischen Kocher (3) und Ausdampfraum (8) ein Druckhalteventil (9) angeordnet ist, das die kontinuierliche Aufrechterhaltung des atmosphärischen Druckes oder eines Überdruckes im Kocher (3) einerseits und eines Unterdrucks im Ausdampfraum (8) andererseits ermöglicht.

5. Vorrichtung nach Anspruch 4, **dadurch gekennzeichnet, dass** zum Verlängern der Verweilzeit der gekochten Lösung unter Ausdampfbedingungen auf mehrere Sekunden der Abschnitt (10) der Leitung (7) zwischen Druckhalteventil (9) und Ausdampfraum (8) großquerschnittig und lang ausgebildet und/oder durch Zwischenschaltung eines zusätzlichen Verweilbehälters (25) vergrößert ist.

6. Vorrichtung nach mindestens einem der Ansprüche 4 oder 5, **dadurch gekennzeichnet, dass** der Ausdampfraum (8) einen ersten Unterdruckraum (13) und einen zweiten Unterdruckraum (14) aufweist, die über ein einstellbares Nadelventil (15) miteinander verbunden sind.

7. Vorrichtung nach mindestens einem der Ansprüche 4 bis 6, **dadurch gekennzeichnet, dass** das Nadelventil (15) in Verbindung mit einer Unterdruckerzeugung so einstellbar ist, dass im ersten Unterdruckraum (13) ein Unterdruck kleiner als etwa 0,6 bar und in dem anschließenden zweiten Unterdruckraum (14) ein Unterdruck kleiner als etwa 0,15 bar herrschen.

8. Vorrichtung nach mindestens einem der Ansprüche 4 bis 7, **dadurch gekennzeichnet, dass** der Ausdampfraum (8) einschließlich des Abschnittes (10) der Leitung (7) nach dem Druckhalteventil (9) und/oder ein zusätzlicher Verweilbehälter (25) doppelwandig umschlossen und an einen Temperierkreislauf (28) angeschlossen ist.

9. Vorrichtung nach mindestens einem der Ansprüche 4 bis 8, **dadurch gekennzeichnet, dass** der erste Unterdruckraum (13) an einen ersten Unterdruckerzeuger (16) und der zweite Unterdruckraum (14) an einen zweiten Unterdruckerzeuger (19) angeschlossen ist.

10. Vorrichtung nach mindestens einem der Ansprüche 4 bis 9, **dadurch gekennzeichnet, dass** die beiden Unterdruckräume (13, 14) so ausgebildet und aufeinander abgestimmt sind, dass die Verweilzeit der gekochten Lösung im ersten Unterdruckraum (13) etwa dem Vierfachen der Verweilzeit im zweiten Unterdruckraum (14) entspricht.

## Claims

1. A method of continuously producing a cooked and vacuumized confectionery masses, especially sweet masses, caramel masses, fondant masses and the like, comprising the steps of boiling, evaporating, subjecting to vacuum and thus further evaporating and cooling an aqueous solution of substances, **characterized in that** the aqueous solution of the substances between cooking and evaporating is conveyed through a pressure barrier and thus separated with respect to pressure, that the solution is cooked under atmospheric pressure or a slight over, and **in that** the cooked solution of substances after passing the pressure barrier is evaporated under vacuum for at least a few seconds.

2. The method of claim 1, **characterized in that** the cooked solution is evaporated for a period of time of at least 10 sec.

3. The method of claim 1 or 2, **characterized in that** the cooked solution is evaporated in two steps, the first step with a vacuum lower than about 0,6 bar absolute and the subsequent second step with a vacuum lower than about 0,15 bar absolute.

4. An apparatus for continuously producing a cooked and vacuumized confectionery masses, especially sweet masses, caramel masses, fondant masses and the like, especially according to the method of at least one of the claims 1 to 3, comprising a boiling apparatus (3), an evaporating chamber (8), and a conduit (7), the conduit being designed and arranged to connect the boiling apparatus to the evaporating chamber, and a subsequent discharging apparatus (20), **characterized in that** a pressure maintaining valve (9) is arranged in the conduit (7) between the boiling apparatus (3) and the evaporating chamber (8), the pressure maintaining valve being designed and arranged to continuously maintain atmospheric pressure or overpressure in the boiling apparatus (3) and negative pressure in the evaporating chamber (8).

5. The apparatus of claim 4, **characterized in that** the conduit (7) includes a section (10) being designed to have an enlarged cross section and to be comparatively long or comprises an additional residing container (25) to increase the period of time during which the confectionery mass is evaporated to at least a few seconds.

6. The apparatus of at least one of the claims 4 to 5, **characterized in that** the evaporating chamber (8) includes a first negative pressure chamber (13), a second negative pressure chamber (14) and an adjustable needle valve (15), the first and second negative pressure chambers being interconnected by the adjustable needle valve.

7. The apparatus of at least one of the claims 4 to 6, **characterized in that** the needle valve (15) with respect to the generation of vacuum is designed to be adjustable in a way that the pressure in the first negative pressure chamber (13) is less than approximately 0.6 bar and the pressure in the subsequent second negative pressure chamber (14) is less than approximately 0.15 bar.

8. The apparatus of at least one of the claims 4 to 7, **characterized in that** the evaporating chamber (8) and the section (10) of the conduit (7) downstream the pressure keeping valve (9) and/or the additional residing container (25) being designed to be double-walled and being connected to the tempering circuit (28).

9. The apparatus of at least one of the claims 4 to 8, **characterized in that** the first negative pressure chamber (13) is connected to a first negative pressure generator (16) and the second negative pressure chamber (14) is connected to a second negative pressure generator (19).

10. The apparatus of at least one of the claims 4 to 9, **characterized in that** the first and second negative pressure chambers (13, 14) are designed and arranged in a way that the period of time during which the cooked confectionery mass is located in the first negative pressure chamber (13) is approximately a quadruple of the period of time during which the confectionery mass is located in the second negative pressure chamber (14).

## Revendications

1. Procédé de fabrication en continu de masses de sucreries cuites et mises sous vide, en particulier des masses de bonbon, de caramel, de fondant ou analogue, dans lequel une solution aqueuse de matières premières est cuite, desséchée, mise sous dépression en la desséchant et refroidie, **caractérisé en ce que** la solution aqueuse des matières premières est guidée entre la cuisson et le dessèchement à travers une barrière de pression et séparée par pression, **en ce que** la solution est cuite sous pression atmosphérique ou une légère surpression et **en ce que** la solution cuite est desséchée sous dépression après passage de la barrière de pression pendant un temps d'exposition de quelques secondes.

2. Procédé selon la revendication 1, **caractérisé en ce que** la solution cuite est desséchée pendant un temps d'exposition d'au loins 10 s.

3. Procédé selon la revendication 1 ou 2, **caractérisé en ce que** la solution cuite est desséchée en deux étapes, en utilisant une dépression inférieure à environ 0,6 bar absolu dans la première étape et une dépression inférieure à environ 0,15 bar absolu dans la seconde étape.

4. Dispositif de fabrication en continu de masses de sucreries cuites et mises sous vide, en particulier des masses de bonbon, de caramel, de fondant ou analogue notamment par le procédé selon l'une au moins des revendications 1 à 3 au moyen d'un cuiseur (3), au moins une chambre de dessèchement (8) reliée à lui par une conduite (7) et un dispositif d'extraction (20) monté en aval, **caractérisé en ce qu'**une soupape de maintien de la pression (9) est disposée entre le cuiseur (3) et la chambre de dessèchement (8), qui permet le maintien en continu de la pression atmosphérique ou d'une surpression dans la cuiseur (3) d'une part et d'une dépression dans la chambre de dessèchement (8).

5. Dispositif selon la revendication 4, **caractérisé en ce que** pour allonger de plusieurs secondes le temps de traitement de la solution cuite dans les conditions de dessèchement, la partie (10) de la conduite (7) entre la soupape de maintien de la pression (9) et la chambre de dessèchement (8) est longue et pourvue de grande section droite et/ou est agrandie par montage intermédiaire d'un récipient de retardement supplémentaire (25).

6. Dispositif selon au moins une des revendications 4 ou 5, **caractérisé en ce que** la chambre de dessèchement (8)présente une première chambre de dépression (13) et une seconde chambre de dépression (14) reliées entre elles au moyen d'une soupape à aiguille réglable (15).

7. Dispositif selon au moins une des revendications 4 à 6, **caractérisé en ce que** la soupape à aiguille peut être réglée en fonction de la création d'une dépression de manière à ce que règne une dépression inférieure à environ 0,6 bar absolu dans la première chambre de dépression (13) et une dépression inférieure à environ 0,15 bar absolu dans la seconde chambre de dépression (14).

8. Dispositif selon au moins une des revendications 4 à 7, **caractérisé en ce que** la chambre de dessèchement (8) y compris la partie (10) de la conduite (7) est montée après la soupape de maintien de la pression (9) et/ou qu'un récipient de retardement supplémentaire (25) est entouré en double paroi et est relié à un circuit de températion (28).

9. Dispositif selon au moins une des revendications 4 à 8, **caractérisé en ce que** la première chambre de dépression (13) est reliée à un premier générateur de dépression (16) et la seconde chambre de dépression (14) à un second générateur de dépression (19).

10. Dispositif selon au moins une des revendications 4 à 9, **caractérisé en ce que** les deux chambres de dépression (13, 14) sont réalisées et sont accordées entre elles de telle façon que le temps de traitement de la solution cuite dans la première chambre de dépression (13) est à peu près le quadruple du temps de traitement de la solution cuite dans la seconde chambre de dépression (14).
